# EUROPÄISCHE PATENTSCHRIFT

(11) **EP 0 996 582 B1**
(45) Veröffentlichungstag und Bekanntmachung des Hinweises auf die Patenterteilung: **31.10.2001**
(21) Anmeldenummer: 98934811.5
(22) Anmeldetag: 27.05.1998
(51) Int. Cl.: B65G 21/22, B65G 17/32

(54) **FÖRDEREINRICHTUNG**
CONVEYOR DEVICE
DISPOSITIF DE TRANSPORT

(30) Priorität: 19.07.1997 DE 19731084
(43) Veröffentlichungstag der Anmeldung: 03.05.2000
(73) Patentinhaber: ROBERT BOSCH GMBH, 70442 Stuttgart (DE)
(72) Erfinder: DIETRICH, Walter, D-71384 Weinstadt (DE); KRIEGER, Eberhard, D-71384 Weinstadt (DE); STOECKEL, Klaus, D-71404 Korb (DE)
(86) Internationale Anmeldenummer: DE9801450
(87) Internationale Veröffentlichungsnummer: WO9903762

(56) Entgegenhaltungen:
- WO-A-96/37422
- CH-A- 520 607
- FR-A- 1 070 445

## Beschreibung

### Stand der Technik

Die Erfindung betrifft eine Fördereinrichtung nach dem Oberbegriff des Anspruchs 1, wie sie aus der CH 520 607 A bekannt geworden ist. Eine weitere, beispielsweise aus der DE 40 36 510 A1 bekannt gewordene Fördereinrichtung, die zum Transport von zwischen Mitnehmern aufgenommenen Faltschachteln dient, hat mehrere parallel zueinander angeordnete Förderketten, die jeweils zahnradförmige Umlenkräder umschlingen. Aufgrund der Umlenkräder dürfen die Kettenglieder der Förderketten eine bestimmte Länge nicht überschreiten, damit diese sicher von den Zähnen der Umlenkräder geführt werden können. Ferner sind als Auflage für die aufgeklappten Faltschachteln Führungsschienen vorgesehen, auf denen die Faltschachteln entlanggleiten, und zwischen denen die Mitnehmer der Förderketten herausragen. Die Führungsschienen sind erforderlich, da die aufgeklappten Faltschachteln aus Gründen der Verschmutzungs- und der Beschädigungsgefahr nicht unmittelbar auf den Förderketten aufliegen können. Der bauliche Aufwand der bekannten Fördereinrichtung ist infolge der Führungsschienen relativ hoch. Weiterhin sind aufgrund der Reibung zwischen den Faltschachteln und den Führungsschienen insbesondere kleine Faltschachtelformate schwierig zu handhaben.

### Vorteile der Erfindung

Die erfindungsgemäße Fördereinrichtung mit den kennzeichnenden Merkmalen des Anspruchs 1 hat demgegenüber den Vorteil, daß keine zusätzlichen Führungsschienen o.ä. erforderlich sind. Daher ist auch der bauliche Aufwand der Fördereinrichtung relativ gering.

Weitere Vorteile und vorteilhafte Weiterbildungen der erfindungsgemäßen Fördereinrichtung ergeben sich aus den Unteransprüchen und der Beschreibung.

### Zeichnung

Ein Ausführungsbeispiel der Erfindung ist in der Zeichnung dargestellt und wird im folgenden näher erläutert. Es zeigen:
Figur 1 eine teilweise aufgeschnittene Seitenansicht einer Fördereinrichtung,
Figur 2 eine Frontansicht der Fördereinrichtung nach Figur 1 im Schnitt, und
Figur 3 eine Seitenansicht einer gegenüber der Fördereinrichtung nach Figur 1 abgewandelten Fördereinrichtung.

### Beschreibung des Ausführungsbeispiels

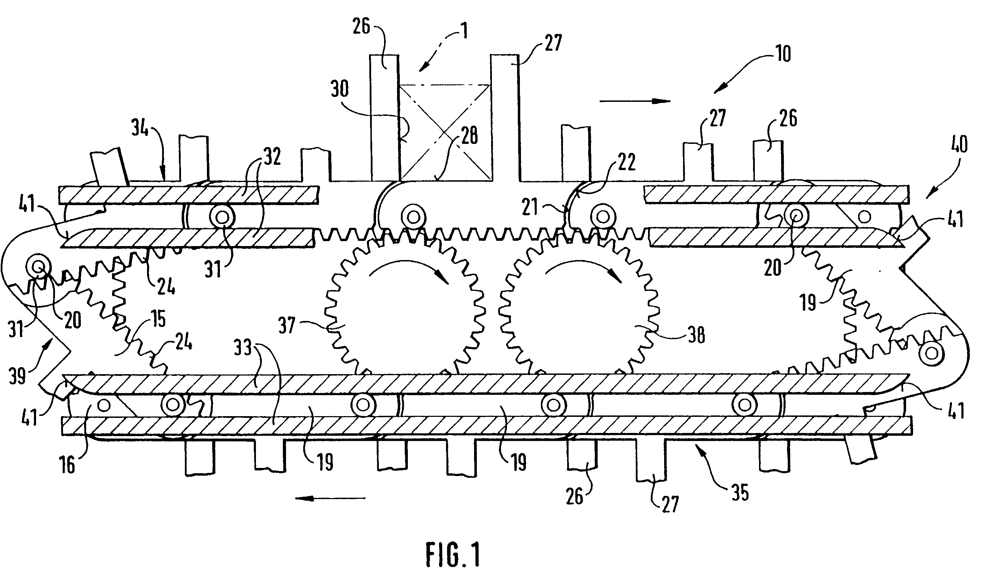

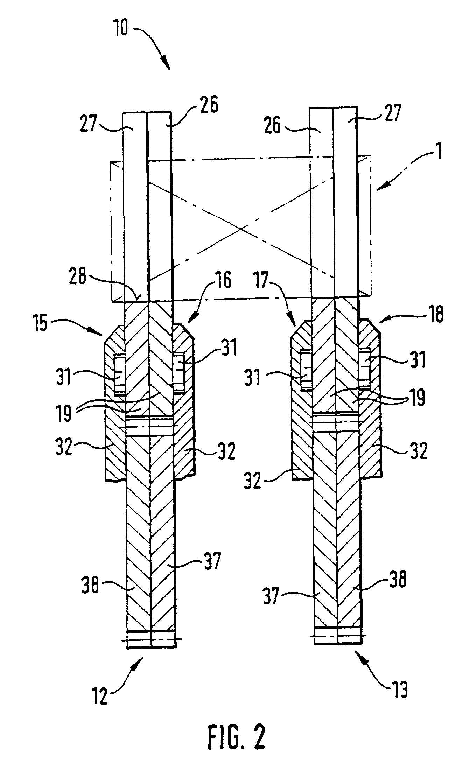

Die in den Figuren 1 und 2 dargestellte Fördereinrichtung 10 dient zum Transport von Gegenständen, insbesondere von aufgerichteten Faltschachteln 1, und ist Bestandteil einer nicht dargestellten Kartoniermaschine. Die Fördereinrichtung 10 hat zwei in einem dem Faltschachtelformat angepaßten Abstand parallel zueinander angeordnete, endlose Förderkettenpaare 12, 13. Jedes Förderkettenpaar 12, 13 besteht aus jeweils zwei Förderketten 15, 16 und 17, 18, wovon jeweils die beiden in der Draufsicht äußeren Förderketten 15, 18 und die beiden inneren Förderketten 16, 17 miteinander synchron beweglich sind.

Jede Förderkette 15 bis 18 besteht aus zahnstangenförmig ausgebildeten Kettengliedern 19, die jeweils mit einem Gelenkstift 20 gelenkig miteinander verbunden sind. Um die Beweglichkeit der Kettenglieder 19 um die Achse der Gelenkstifte 20 und gleichzeitig einen nahezu spaltfreien Übergang zwischen den einzelnen Kettengliedern 19 jeder Förderkette 15 bis 18 zu ermöglichen sind die Kettenglieder 19 im Bereich des Gelenkstiftes 20 in ihrer Dicke reduziert, wobei sie sich gleichzeitig in diesem Bereich überlappen. Ferner sind die direkt aneinandergrenzenden Stirnflächen 21, 22 der Kettenglieder 19 konvex bzw. konkav ausgebildet.

Die Seitenflächen der Förderketten 15 bis 18 sind durch die Überlappung der einzelnen Kettenglieder 19 jeder Förderkette 15 bis 18 eben ausgebildet, so daß die einander zugewandten Seitenflächen der Förderketten 15, 16 und 17, 18 aneinander gleitend anliegen.

Auf der den Faltschachteln 1 abgewandten Unterseite der Kettenglieder 19 haben diese eine über deren gesamte Länge verlaufende Verzahnung 24, während zur Aufnahme der Faltschachteln 1 senkrecht von den Kettengliedern 14 abstehende Mitnehmerstege 26, 27 vorgesehen sind. Die Mitnehmerstege 26, 27, die in etwa der Mitte der Kettenglieder 19 angeordnet sind, bilden zusammen mit der eine ebene Auflagefläche ausbildenden Oberseite 28 der Kettenglieder 19 eine formschlüssige Aufnahme 30 für eine Faltschachtel 1 aus.

Die Gelenkstifte 20 sind auf den einander abgewandten Seitenflächen der Förderketten 15, 16 und 17, 18 verlängert als Führungszapfen 31 ausgebildet. Die Führungszapfen 31 gleiten in Zwischenräumen jeweils zweier geradlinig ausgebildeter, parallel zueinander angeordneter Führungsschienen 32, 33, die eine obere Führungbahn 34 und eine untere Führungsbahn 35 für die Kettenglieder 19 ausbilden. Der Abstand der Führungsschienen 32, 33 voneinander ist derart, daß jeweils zwei zwischen der oberen Führungsbahn 34 und der unteren Führungsbahn 35 angeordnete Antriebszahnräder 37, 38 für die Förderketten 15 bis 18 jeweils gleichzeitig mit einer Verzahnung 24 eines auf der oberen Führungsbahn 34 und eines auf der unteren Führungsbahn 35 befindlichen Kettengliedes 19 in Eingriff stehen.

Die beiden Antriebszahnräder 37 und die beiden anderen Antriebszahnräder 38 sind jeweils miteinander gekoppelt, so daß die beiden inneren Förderketten 16, 17 und die beiden äußeren Förderketten 15, 18 jeweils synchron antreibbar sind. Zum Antreiben der Antriebszahnräder 37, 38 dient ein nicht dargestellter Antrieb. Dieser Antrieb umfasst entweder für jeweils die beiden Antriebszahnräder 37 und 38 je einen getrennten Antriebsmotor, oder für alle Antriebszahnräder 37, 38 einen gemeinsamen Antriebsmotor, wobei dann mittels einer Kupplungseinrichtung die Winkellage der beiden Antriebszahnräder 37 zur Winkellage der beiden anderen Antriebszahnräder 38 veränderbar ist. Somit wird entweder durch die beiden getrennten Antriebsmotoren oder die Kupplungseinrichtung ein Verstellen des Abstandes zwischen den Mitnehmerstegen 26, 27 zur Anpassung an verschiedene Faltschachtelformate ermöglicht.

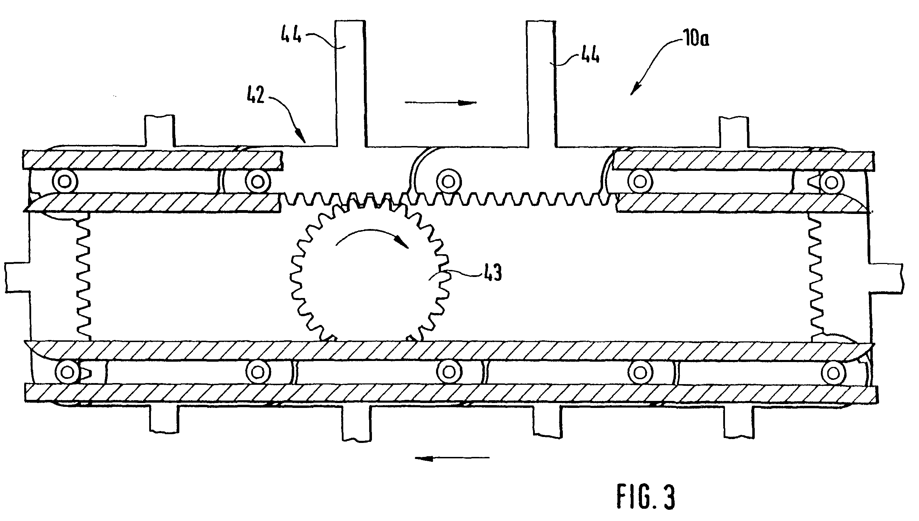

Die an den beiden Stirnseiten der Führungsschienen 32, 33 befindlichen Umlenkbereiche 39, 40 der Förderglieder 19 sind führungsmittelfrei. Wesentlich für eine kinematisch eindeutige führungsmittelfreie Umlenkung der Förderglieder 19 ist, daß der Abstand zwischen den beiden Führungsschienen 32, 33 und der Abstand zwischen zwei aufeinanderfolgenden Gelenkstiften 20 bzw. Führungszapfen 31 derart ist, daß in den Umlenkbereichen 39, 40 jeweils wenigstens ein Führungszapfen 31 zweier aufeinanderfolgender Förderglieder 19 im Eingriff mit einer der Führungsschienen 32, 33 ist (siehe Figuren 1 und 3). Um das Einführen der Führungszapfen 31 in die Führungsschienen 32, 33 zu erleichtern sind die Einlaufbereiche an den zueinander zugewandten Seiten der Führungsschienen 32, 33 mit Einlaufradien 41 versehen.

Bei der in der Figur 3 dargestellten abgewandelten Fördereinrichtung 10a ist nur eine einzige Förderkette 42 mit einem Antriebszahnrad 43 vorgesehen. Eine derartige Fördereinrichtung 10a ist zum Fördern von Gegenständen geeignet, deren Größe keine Anpassung des Abstandes ihrer Mitnehmerstege 44 erforderlich macht. Gegnüber der Vorrichtung 10 ist der Bauaufwand aufgrund der geringeren Teilezahl verringert.

Ergänzend wird erwähnt, daß die beiden Vorrichtungen 10, 10a in verschiedener Weise abgeändert werden können. So ist es beispielsweise denkbar, zum Antreiben der auf der oberen und der unteren Führungsbahn befindlichen Kettenglieder jeweils getrennte Antriebe oder Antriebsräder vorzusehen, die miteinander gekoppelt sind. Ferner eignet sich die Vorrichtung 10, 10a auch als Förderband, wenn auf die Mitnehmerstege verzichtet wird. Zur Reibungsverringerung kann es vorteilhaft sein, an den Führungszapfen 31 Rollen vorzusehen, die in den Führungsschienen geführt sind und dort abrollen. Zuletzt ist es auch denkbar den Zahnstangenantrieb der Kettenglieder durch einen Linear-Schrittantieb zu ersetzen.

## Patentansprüche

1. Fördereinrichtung (10; 10a), mit einem zwischen zwei Umlenkbereichen (39, 40) umlaufenden, mit einem Antrieb gekoppelten kettenförmigen Fördermittel (12, 13; 42), das jeweils aus miteinander mittels Gelenken (20) verbundenen Kectenelementen (19) besteht, wobei zwischen den Umlenkbereichen (39, 40) an einer oberen und einer unteren Wegstrecke (34, 35) jeweils wenigstens eine Führung (32, 33) für die Kettenelemente (19) angeordnet ist, wobei jedes Kettenelement (19) ein mit der wenigstens einen Führung (32, 33) zusammenwirkendes Führungselement (31) aufweist, wobei in den Umlenkbereichen (39, 40) wenigstens ein Führungselement (31) zweier aufeinanderfolgender Kettenelemente (19) mit der oberen und/oder unteren. Führung (32, 33) in Wirkverbindung angeordnet ist, und wobei das Führungselement (31) in Verlängerung des Gelenkes (20) angeordnet ist, **dadurch gekennzeichnet, daß** die Umlenkbereiche (39, 40) führungsmittelfrei ausgebildet sind, und daß der Antrieb mit dem Fördermittel (12, 13; 42) an der oberen und der unteren Wegstrecke (34, 35) gleichzeitig in Eingriff steht.

2. Fördereinrichtung nach Anspruch 1, **dadurch gekennzeichnet, daß** an den Kettenelementen (19) Mitnehmerelemente (26, 27; 44) ausgebildet sind, die zusammen mit der Oberseite (28) der Kettenelemente (19) jeweils eine formschlüssigen Aufnahme (30) für einen Gegenstand, insbesondere eine aufgerichtete Faltschachtel (1), bildet.

3. Fördereinrichtung nach Anspruch 2, **dadurch gekennzeichnet, daß** das Fördermittel (12, 13) wenigstens zwei parallel zueinander angeordnete Förderketten (15 bis 18) umfasst und daß die Abstände zwischen den Mitnehmerelementen (26, 27) der Förderketten (15 bis 18) zur Anpassung an verschiedene Faltschachtelformate veränderbar sind.

4. Fördereinrichtung nach einem der Ansprüche 1 bis 3, **dadurch gekennzeichnet, daß** die dem Antrieb zugewandte Seite des Kettenelements (19) als Zahnstangenprofil (24) ausgebildet ist.

5. Fördereinrichtung nach Anspruch 4, **dadurch gekennzeichnet, daß** der Antrieb wenigstens ein mit dem Zahnstangenprofil (24) zusammenwirkendes Antriebszahnrad (37, 38) aufweist.

6. Fördereinrichtung nach Anspruch 5, **dadurch gekennzeichnet, daß** die einander zugewandten Zahnstangenprofile (24) der Kettenelemente (19) der oberen und der unteren Wegstrekke (34, 35) einen Abstand voneinander haben, der dem Durchmesser des wenigstens einen Antriebszahnrads (37, 38) entspricht, so daß das wenigstens eine Antriebszahnrad (37, 38) gleichzeitig mit einem Zahnstangenprofil (24) auf der oberen Wegstrecke (34) und einem Zahnstangenprofil (24) auf der unteren Wegstrecke (35) im Eingriff steht.

## Claims

1. Conveying apparatus (10; 10a) having a chain-like conveying means (12, 13; 42) which circulates between two deflection regions (39, 40), is coupled to a drive and comprises in each case chain elements (19) which are connected to one another by means of articulations (20), where in each case at least one guide (32, 33) for the chain elements (19) is arranged, between the deflection regions (39, 40), on a top and a bottom path (34, 35), where each chain element (19) has a guide element (31) which interacts with the at least one guide (32, 33), where, in the deflection regions (39, 40), at least one guide element (31) of two successive chain elements (19) is in operative connection with the top and/or bottom guide (32, 33), and where the guide element (31) is arranged in extension of the articulation (20), **characterized in that** the deflection regions (39, 40) are designed without guide means, and **in that** the drive engages with the conveying means (12, 13; 42) on the top and the bottom paths (34, 35) at the same time.

2. Conveying apparatus according to Claim 1, **characterized in that** the chain elements (19) have formed on them carry-along elements (26, 27; 44) which, together with the top side (28) of the chain elements (19), form in each case a positively locking receiving means (30) for an object, in particular an erected folding box (1).

3. Conveying apparatus according to Claim 2, **characterized in that** the conveying means (12, 13) comprises at least two mutually parallel conveying chains (15 to 18), and **in that** the distances between the carry-along elements (26, 27) of the conveying chains (15 to 18) can be changed for adaptation to different folding-box formats.

4. Conveying apparatus according to one of Claims 1 to 3, **characterized in that** that side of the chain element (19) which is directed towards the drive is designed as a toothed-rack profile (24).

5. Conveying apparatus according to Claim 4, **characterized in that** the drive has at least one driving gear wheel (37, 38) which interacts with the toothed-rack profile (24).

6. Conveying apparatus according to Claim 5, **characterized in that** the mutually facing toothed-rack profiles (24) of the chain elements (19) of the top and bottom paths (34, 35) are spaced apart from one another by a distance which corresponds to the diameter of the at least one driving gearwheel (37, 38), with the result that the at least one driving gearwheel (37, 38) simultaneously engages with a toothed-rack profile (24) on the top path (34) and a toothed-rack profile (24) on the bottom path (35).

## Revendications

1. Dispositif transporteur (10 ; 10a) dans lequel :
- un moyen de transport (12, 13 ; 42) en forme de chaîne circulant entre deux zones de renvoi (39, 40), est accouplé à un entraînement et composé chaque fois d'éléments de chaîne (19) reliés entre eux par des articulations (20),
- entre les zones de renvoi (39, 40), le long de chacune de deux parties supérieure et inférieure de parcours (34, 35), est monté au moins un guide (32, 33) des éléments de chaîne (19), dont chacun des éléments (19) porte un élément de guidage (31) coopérant avec au moins un guide (32, 33),
- dans les zones de renvoi (39, 40) au moins un élément de guidage (31) de deux éléments de chaîne (19) successifs est en interaction avec le guide supérieur et/ou inférieur (32, 33), cet élément de guidage (31) étant monté dans le prolongement de l'articulation (20),
**caractérisé en ce que**
les zones de renvoi (39, 40) sont dépourvues de moyens de guidage et l'entraînement est en prise simultanément avec le moyen d'avancement (12, 13 ; 42) le long de la partie supérieure et de la partie inférieure du parcours (34, 35).

2. Dispositif transporteur selon la revendication 1,
**caractérisé en ce que**
les éléments de chaîne (19) portent des éléments d'entraînement (26, 27 ;44) qui, avec la face supérieure (28) des éléments de chaîne (19) forment chacun un réceptacle (30) avec combinaison de formes, pour un objet, en particulier une boîte pliante (1) dressée.

3. Dispositif transporteur selon la revendication 1,
**caractérisé en ce que**
le moyen de transport (12, 13) comprend au moins deux chaînes transporteuses (15 à 18) parallèles et les espaces séparant les éléments d'entraînement (26, 27) des chaînes transporteuses (15 à 18) peuvent être modifiées pour s'adapter aux différents formats de boîte pliante.

4. Dispositif transporteur selon l'une quelconque des revendications 1 à 3,
**caractérisé en ce que**
le côté de l'élément de chaîne (19) tourné vers l'entraînement est constitué par un profil de crémaillère (24).

5. Dispositif transporteur selon la revendication 4,
**caractérisé en ce que**
l'entraînement présente au moins une roue dentée d'entraînement (37, 38) coopérant avec le profil de crémaillère (24).

6. Dispositif transporteur selon la revendication 5,
**caractérisé en ce que**
les profils de crémaillère (24) tournés l'un vers l'autre des éléments de chaîne (19) situés le long des pistes de guidage supérieure et inférieure (34, 35) sont séparés par une distance correspondant au diamètre d'au moins une roue dentée d'entraînement (37, 38), de sorte qu'au moins une telle roue est en prise à la fois avec un profil de crémaillère (24) le long de la piste supérieure (34) et avec un profil de crémaillère (24) le long de la piste inférieure (35).
